# EUROPEAN PATENT APPLICATION

(11) **EP 1 642 781 A1**
(43) Date of publication of application: **05.04.2006**
(21) Application number: 04104802.6
(22) Date of filing: 30.09.2004
(51) Int. Cl.: B60R 21/01, B60N 2/00

(54) **Child seat sensor**

(71) Applicant: IEE INTERNATIONAL ELECTRONICS & ENGINEERING S.A., 6468 Echternach (LU)
(72) Inventor: Decoster, Yves, 6760 Ethe (BE); Orlewski, Pierre, 9021 Ettelbruck (LU)
(74) Representative: Beissel, Jean

(57) **Abstract**

A child seat sensor (10) comprises at least one antenna structure (22,24,26) to be integrated into a vehicle seat (16). The at least one antenna structure (22,24,26) comprises at least one antenna wire for emitting and/or receiving an electromagnetic field, which may be influenced by the presence and/or the orientation of a child seat. According to an important aspect of the invention, the child seat sensor (10) comprises a fixing element (28) for fixing the antenna structure (22,24,26) to a portion of the seat (16). The fixing element (28) is arranged together with the antenna wire on an individual carrier material (30) in such a way, that the antenna structure (22,24,26) is fixable to the seat portion (16) by activation of the fixing element (28).

## Description

### Technical field

The present invention generally relates to a child seat sensor for the d e-tection of certain parameters of an auxiliary child seat on a passenger seat of a vehicle. These parameters are used in order to adapt air bag deployment in case of an accident to the circumstances determined by these parameters.

### Background Art

In the automotive technology field, efforts are made to gain reliable information regarding passenger seat occupation. According to the occupation status, air bag deployment conditions may be varied. For this reason, seat occupancy sensors are provided, which enable to detect one or more parameters relating to the seat occupancy. Passenger presence detection (PPD) and child seat presence and orientation detection (CPOD) are some of the most important aspects of the task. Other sensors that are used in this context comprise e.g. pressure sensors, which are used in seat belt reminder systems (SBR).

German patent application DE 4409971 A1 discloses an installation for determining certain parameters of a child seat, wherein a CPOD sensor is an integral component of a seat occupancy sensor. The CPOD sensor consists in at least one antenna emitting an alternating electromagnetic field. If a child seat is equipped with an identification carrier, the electromagnetic field emitted by the a ntenna is altered in a characteristic manner and the change of the field can be detected by a base station, which is in communication with air bag controlling electronics.

Currently, emission and reception antenna circuits are designed and manufactured as a subunit of integrated CPOD-PPD solutions and are assembled into the seat cushion as a unique sensor. Because of the size of the complete device and contradictory assembly requirements, the design and integration effort is considerable. The CPOD antennas should be placed next to the seat surface; otherwise, the emitted electromagnetic field would be considerably attenuated by the cushion material, resulting in decreased detection robustness. On the other hand, the pressure sensitive passenger presence detector often requires to be located deeper in the cushion. If the pressure sensor is located near the seat surface, an additional felt layer should be interposed between the seat cover and the pressure sensor, in order to keep the latter imperceptible by eye or by touch. With increasing importance of visual and haptic aesthetics in automobile interior design, this requirement makes the design process considerably more difficult.

While integrated CPOD-PPD solutions may still be convenient in traditional seat assembly process where foaming of the cushion and seat trimming are separate processes, they are not adapted to non-traditional seat production where the seat trim is directly bonded to the seat cushion foam during foaming, or when a seat heating system is required.

### Technical problem

It is an object of the present invention to provide a child seat sensor that facilitates and renders more flexible manufacturing of passenger seats for vehicles. This is achieved by a child seat sensor as claimed in claim 1.

### General Description of the Invention

A child seat sensor comprises at least one antenna structure to be integrated into a vehicle seat. The at least one antenna structure comprises at least one antenna wire for emitting and/or receiving an electromagnetic field, which may be influenced by the presence and/or the orientation of a child seat. According to an important aspect of the invention, the child seat sensor comprises a fixing element for fixing the antenna structure to a portion of the seat. The fixing element is arranged together with the antenna wire on an individual carrier material in such a way, that the antenna is fixable to the seat portion by activation of the fixing element.

By providing the antenna for the child seat presence and orientation detection with a fixing element on an individual carrier material, one considerably facil i-tates the seat assembly process. In fact, the antenna may be integrated easily into any seat portion, like the seat upholstery or the seat cushion, without any restrictions relating to an integrated sensing device. The child seat sensor being mounted independently from other electronic parts such as passe nger presence detector or seat heating mat, assures a high level of design flexibility. Passenger seat design can incorporate the CPOD sensor as a stand-alone component, which opens a wide range of new design options. For example, other technology and materials may be used for manufacturing the CPOD sensor. Furthermore, pressure sensors for seat occupation detection need to be precisely tuned for the given seat layout and trim mockup, while antennas do not. By freeing the antenna structures from the design restrictions of a possible pressure sensitive seat sensor, the present invention will allow a higher degree of design transferability between different seat types. Ultimately production costs may be lowered. On the other hand, a complementary pressure sensitive sensor for PPD or SBE of an integrated sensing system may be arranged at any suitable location in the seat independently of requirements with respect to the antenna structures. This pressure sensor may thus be arranged for optimized sensitivity or reduced perceptibility.

In a possible embodiment of the invention, the fixing element comprises a double-sided adhesive layer, the antenna wire being sandwiched between the carrier material and the double-sided adhesive layer. The double-sided adhesive layer is pressure activateable and may be pressed against a suitable seat portion in order to fix the position of the antenna structure in the seat. For example, one could bond the antenna structure to the seat cushion cover prior to the foaming-in process, the carrier material being in this case a thin foam sheet. Preferably, the double-sided adhesive layer comprises a protecting film on an outer surface facing away from said carrier material. This is particularly convenient during transport of the manufactured child seat sensors if seat and sensor productions take place in different locations. In this embodiment, the protecting film is peeled off from said double-sided adhesive layer prior to fixing the position of the antenna structure in the seat.

According to another preferred embodiment of the invention, the fixing element comprises a thermo-activatable adhesive. In some cases, the process of bonding the seat cover to the seat cushion uses vapour of high temperature and pressure. Normally the child seat sensor is to be arranged between seat cushion and seat cover as it is favourable if the emitting and receiving antennas are arranged close to the seat surface. Thus, using hot-melt or thermo-activatable adhesive having a low melting point for fixing the antenna would not condition additional heating.

In a further embodiment, however, the fixing element advantageously comprises further an electrical circuit in heat transfer relationship with the thermo-activatable adhesive. Thus heating of the adhesive can easily be done by connecting the electrical circuit to a power supply. This is particularly suited for seat assembly processes at ambient temperature.

The transmitting and receiving antennas are typically composed by electrical wires arranged in loops so as to cover a large seat area. These wires could be twisted with an additional electrical heating wire and carried on a thin carrier material such as e.g. woven, non-woven, polymer and/or foam material. This carrier material may contain a continuous layer and/or locally arranged spots of an adhesive (e,g. thermo-activatable adhesive, glue, hot-melt or resin). After alignment of the carrier material including the antenna loops on the seat trim or seat upholstery, a heating current may be sent through the additional heating wire in order to produce a quantity of heat which is required to melt down the adhesive contained in or deposited on the carrier material.

In a possible variant of this embodiment the antenna may be part of the electrical circuit. Heating the adhesive could be done via the antenna wires, which would result in reduced wiring. A further advantage is that no additional connection is necessary, as one could use the antenna connection to supply power for heating.

Preferably, the fixing element comprises press sensitive positioning adhesives helping to maintain the correct position of the child seat sensor prior to activating the adhesive, e.g. by heating.

It should be noted, that the carrier material of the present child seat sensor is provided mainly for handling purposes during assembly of the seat. Once the antenna structures are fixed on the corresponding seat portion (e.g. seat trim or seat cushion), the carrier material is no longer needed. It follows that in a possible embodiment, the carrier material may be removed after the fastening of the antenna structures.

### Brief Description of the Drawings

Preferred embodiments of the invention will now be described, by way of example, with reference to the accompanying drawings in which:
Fig. 1 shows a top view of the base part of a passenger seat;
Fig. 2 is a vertical cross-section of the base part of a passenger seat, wherein the antenna on its carrier layer is sandwiched between cushion and seat cover;
Fig. 3 is a top view schematic of a child seat sensor with a re-activatable glue layer;
Fig. 4 is a detailed schematic of a child seat sensor with a re-activatable glue layer as it is attached to the seat cover;
Fig 5 is a vertical cross section of a vehicle seat wherein the carrier layer of the child seat sensor is a thin foam layer;
Fig 6 shows a top view schematic of a child seat sensor on a thin foam layer;
Fig 7 is a detailed view of a child seat sensor sandwiched between a thin foam layer and the seat cushion.

### Description of Preferred Embodiments

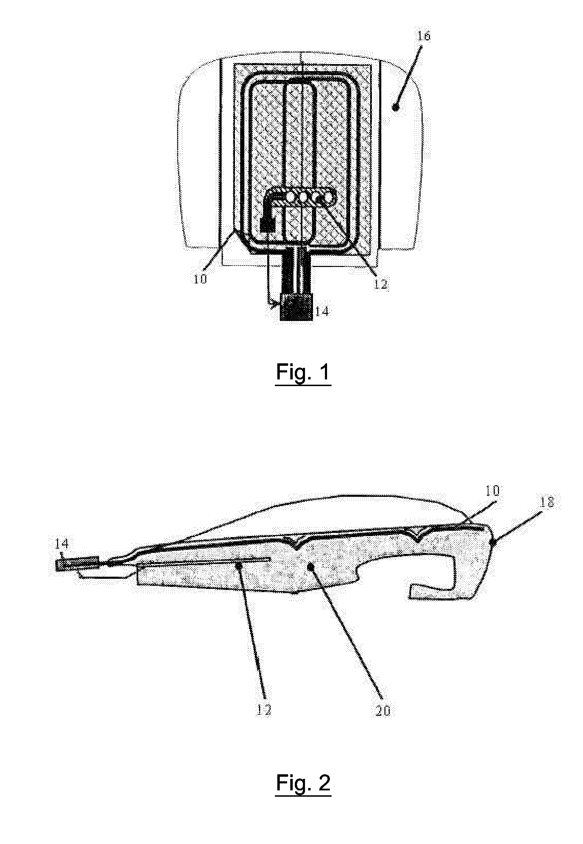

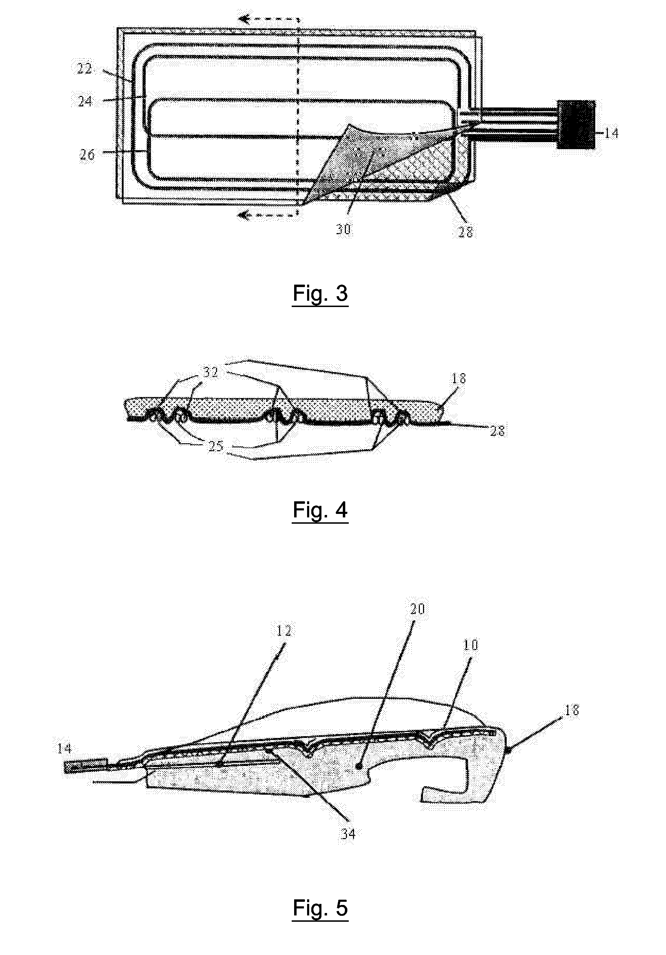

Fig 1 schematically shows a top view of a passenger seat basepart 16 equipped with a child seat sensor 10 and a passengerpresence detector 12. Both sensors are connected to a control unit 14, which is in communication with the vehicle airbag system. According to the signals received from the passenger presence detector 12 and the child seatsensor 10 an airbag control signal is generated by the control unit according to the seat occupation status. As shown in fig 2 and fig 5, the child seat sensor is sandwiched between the seat cover 18 and the seat cushion 20, whereas the passenger presence detector12 is located inside the seat cushion 20.

Fig 2, fig 3 and fig 4 show a child seat sensor 12 accordingto a preferred embodiment. The antenna assembly is composed by an emitting loop 22 which surrounds two receiving loops 24, 26, which are overlapping in a central region of the seat. The antenna assembly is substantially flat and fixed upon a re-activatable glue layer 28. A protecting film layer/liner 30 is further provided for handling purposes. Electrically conductive heatable wires 32 are arranged together with the antenna wires 25. This child seat sensor may e.g. be used in an in-situ seat assembly process. The protecting film 30 is removed and the child seat sensor is positioned at the bottom surface of the seat cover 18, between the seatcushion 20 and the seat cover 18. A current is sent through the heatable wires32, twisted around the antenna wires 25, whereupon the amount of energy necessary to reactivate the glue layer 28 is delivered in order to bond the entire seat assembly.

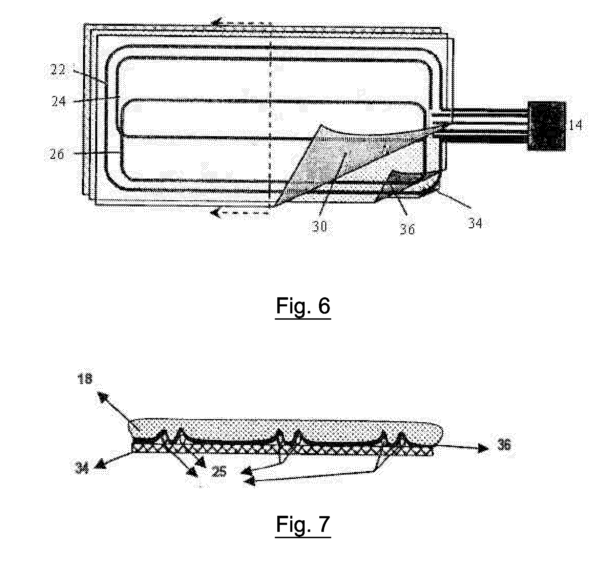

An alternative embodiment is show in fig 5, fig 6 and fig 7, wherein the antenna wires 25 forming the emitting loop 22 and the receiving loops 24, 26 are a r-ranged upon a thin foam layer 34. As shown in detail in fig 6, a double-sided adhesive film layer 36, protected by a protecting film 30 prior to seat assembly, mai n-tains the antenna wires 25 in position on the thin foam layer 34. During seat a s-sembly, the protecting film 30 is removed and the child seat sensor 10 is fixedto the seat cover 18 by means of thedouble-sided adhesive layer 36. The seat cushion 20 is subsequently foamed into the seatcover 18.

In both embodiments, the pressure detection sensor 12 is arrangedin the seat by a suitable assembly process. As represented in figures 2 and 5, the pressure sensor 12 may be placed within the foamcushion.

## Claims

1. A child seat sensor comprising at least one antenna structure to be integrated into a vehicle seat, said at least one antenna structure comprising at least one antenna wire for emitting and/or receiving an electromagnetic field **characterized by** a fixing element for fixing said antenna structure to a portion of said seat, said fixing element being arranged together with said antenna wire on an individual carrier material in such a way, that said antenna structure is fixable to said seat portion by activation of said fixing element.

2. The device as claimed in claim 1, wherein said fixing elementcomprises a double-sided adhesive layer and wherein said antenna wire is sandwiched between said carrier material and said double-sided adhesive layer.

3. The device as claimed in claim 2, wherein said double-sided adhesive layer comprises a protecting film on an outer surface which faces away from said carrier material.

4. The device as claimed in any one of claims 1 to 3, wherein said fixing element comprises a thermo-activatable adhesive.

5. The device as claimed in claim 4, wherein said fixing element comprises an electrical circuit in heat transfer relationship with said thermo-activatable adhesive.

6. The device as claimed in claim 5, wherein said antenna is part of said electrical circuit.

7. The device as claimed in any one of claims 1 to 6, wherein said fixing element comprises pressure sensitive positioning adhesives.

8. The device as claimed in any one of claims 1 to 7, wherein said carrier material comprises woven and/or non-woven and/or polymer and/or foam material.

9. The device as claimed in any one of claims 1 to 8, wherein said fixing element comprises a continuous layer and/or locally arranged spots of an adhesive of a group comprising thermo-activatable adhesive, glue, hotmelt or resin.

10. The device as claimed in any one of claims 1 to 9, wherein said portion of said seat comprises a seat cover and/or a seat cushion.
